# EUROPEAN PATENT APPLICATION

(11) **EP 1 178 395 A2**
(43) Date of publication of application: **06.02.2002**
(21) Application number: 01000328.3
(22) Date of filing: 30.07.2001
(51) Int. Cl.: G06F 3/16

(54) **Apparatus and method for communicating a multiword digital message with an isochronous-signal processor**

(30) Priority: 31.07.2000 US 221698 P
(71) Applicant: Texas Instruments Incorporated, Dallas, Texas 75251 (US)
(72) Inventor: Wand, Martin A., Texas 75094, Plano (US); Liu, Hang, Texas 75024, Plano (US)
(74) Representative: Holt, Michael

(57) **Abstract**

An apparatus and method for communicating multi-word digital messages with an isochronous-signal processor. A multi-word protocol enables the transfer of large blocks of data by breaking up the data into smaller blocks that are transferred without interrupting the isochronous data flow. The multi-word protocol includes a register for protocol control and status and another register for read/write data. The protocol may be configured such that a multi-word write and a multi-word read may be in progress at the same time. The protocol is independent of the content of the multi-word message. In addition, for a multi-word read, the data is not required to be available immediately upon receipt of a request, and for a multi-word write, processing of the data is not required to be performed immediately.

## Description

### TECHNICAL FIELD OF THE INVENTION

The present invention relates generally to an apparatus and method for communicating with an isochronous-signal processor, and more particularly to an apparatus and method for communicating multiword digital messages with an isochronous-signal processor.

### DESCRIPTION OF THE BACKGROUND ART

Generally, in electrical communications, a coder/decoder ("codec") is used to perform conversion of data from one form to another. Typically, a codec is implemented as an integrated circuit ("IC") and is often used for analog-to-digital ("A/D") conversion and digital-to-analog ("D/A") conversion of data. A very common use for such a device is in a modem in which digital computer signals are converted to analog audio signals for transmission over a telephone line, and incoming analog audio telephone signals are converted to digital signals for processing by the computer.

One example of an audio codec implementation is described in the Audio Codec '97 specification revision 2.1 ("AC97"), developed by Intel Corporation. AC97, which is hereby incorporated herein by reference, defines a high quality audio architecture for analog and digital audio on the personal computer platform. Only certain aspects of AC97 relevant to the present invention are described herein, and other detailed information may be found by referring to the AC97 specification itself.

AC97 describes a two integrated circuit-type implementation, with one IC being a digital controller and the other IC being an analog signal processor slave. According to the specification, up to four analog slaves may be connected to a single digital controller. The digital controller may be implemented with a discrete component design, on a dedicated digital IC, on a microprocessor or digital signal processor ("DSP"), or a combination thereof. The analog processor may be implemented in a discrete component design, on a dedicated IC such as a codec, on a DSP, or a combination thereof. When the AC97 analog function is implemented on a DSP, the DSP receives/sends digital audio data from/to the AC97 controller. The DSP is responsible for converting the digital data into a form that can be used to generate an audio signal, and vice versa. The form is usually analog, although it may be digital also. The actual data conversion can be performed by the DSP directly or with the aid of another device, such as an audio codec. The digital audio data can be processed by the DSP between the AC97 interface and the audio codec. The functions generally may be implemented in hardware, software, or a combination of both.

The two devices, the AC97 digital controller and the AC97 analog slave, communicate over a 5-line digital interface known as an audio codec-link or AC-link. AC97 includes a provision for transferring single word command and status between the AC97 digital controller and the AC97 analog slave using 64 16-bit registers within the AC97 slave. Most of these registers have specific functions, for example for controlling the volume and mixer functions of the slave. Seventeen of the registers are vendor-reserved.

One disadvantage of the AC97 design is that there are many instances where it is desirable to transfer multiple words or blocks of data between the AC97 controller and the AC97 slave. These include, but are not limited to, firmware updates, filter coefficient downloads, display text, and caller ID data. While the AC97 specification contains provisions for vendor-specific data transfer, the AC97 architecture design calls for each AC97 slave register to contain a specific type of data, whether it be volume, channel selection, modem control, etc. Maintaining this design within the vendor-reserved registers is prohibitive because of the potentially large amount of data that may need to be transferred, coupled with the small number of vendor-reserved registers. The vendor-reserved registers quickly become exhausted, leaving unimplemented functions and no room for additional functionality.

In addition, the media data stream flowing between the controller and the slave is isochronous, and generally cannot be interrupted by other types of data in order for the system to function properly. With media data (e.g., audio, visual or multimedia) processing, the data generally needs to arrive at the destination at close to the same rate of data flow as the source. Another disadvantage of the AC97 design is that this isochronous data stream only leaves small slots of time in which other types of data (e.g., control or status) may be transferred through the interface. Each of these time slots is generally not large enough to allow the transfer of a large block of data.

Another disadvantage of the AC97 design is that the transfer protocol and data content are interrelated, and AC97 places tight time constraints on the transfer of data between the slave and the controller. For example, in responding to a controller status request, a slave must make read data available within a short time period upon receipt of the request. Therefore, status responses generally have to be kept up to date at all times, thus increasing the memory and real-time processing requirements of the slave.

### SUMMARY OF THE INVENTION

These and other problems are generally solved or circumvented, and technical advantages are generally achieved, by preferred embodiments of the present invention which communicate multiword digital messages between a controller and an isochronous-signal processor. A multi-word protocol is provided in the preferred embodiments which enables the transfer of large blocks of data by breaking up the data into smaller blocks that are transferred without interrupting the isochronous data flow. In a preferred embodiment, for an AC97 design, two of the vendor-reserved AC97 registers in the AC97 slave are allocated to the multi-word protocol. One register is used for protocol control and status and the other register is used for read and write data. The protocol may be configured such that a multi-word write and a multi-word read may be in progress at the same time.

In a preferred embodiment, the multi-word command write mechanism in the AC97 slave may use a multi-word command buffer large enough to contain the largest expected multi-word command, along with a word counter. The message may be built in the multi-word command buffer as it is received in real-time. The word counter may be used to verify that the correct number of words has been received. If the block of data is correct, the message may be processed as time permits. The block of data is transferred over a period of time that does not interfere with isochronous data flow.

In another preferred embodiment, a multi-word status read mechanism in the AC97 slave may use a multi-word status buffer large enough to contain the largest multi-word status, along with a word counter. The AC97 controller may request a specific status type, and the AC97 slave may build the requested status in the multi-word status buffer as time permits. The AC97 controller may poll the AC97 slave as appropriate for the specific application to determine when the requested status is ready. The AC97 controller may then read the number of words value and the block of status data from the AC97 slave, one word at a time. The block of data is transferred over a period of time that does not interfere with isochronous data flow.

In accordance with a preferred embodiment of the present invention, a method for communicating a multiple-word digital message with an isochronous-signal processor is disclosed. The method comprises receiving a request to transfer a multiple-word block of data, acknowledging the request, serially transferring the block of data over multiple frames without interrupting isochronous data flow, and compiling the block of data in a data buffer.

In accordance with another preferred embodiment of the present invention, an isochronous-signal processor for processing isochronous signals is disclosed. The isochronous-signal processor comprises a digital interface providing a serial digital link to a digital controller, wherein the isochronous signals are transferred over the digital link, a set of registers for transferring a non-isochronous multiple-word block of data over the digital link, and a data buffer for storing the multiple-word block of data, wherein the data buffer is separate from the set of registers. The register set preferably comprises a control register, a status register, and a data register.

An advantage of a preferred embodiment of the present invention is that it may be implemented to function within the AC97 specification for AC97 register data transfer. In addition, only two of the seventeen available vendor-reserved registers within the AC97 register space are necessary for multi-word transfer, leaving room for future single-word vendor-specific registers.

A further advantage of a preferred embodiment of the present invention is that the protocol is independent of the content of the multi-word message, so that the number of message types is not limited by the protocol. In addition, the real-time processing requirements during reception/transmission of a multi-word message are independent of the message content, so that only the protocol itself must be comprehended in real-time as the message is received/transmitted. The message itself may be processed by a lower priority task once the protocol requirements are satisfied.

A further advantage of a preferred embodiment of the present invention is that successive words of the multi-word message may be, but are not required to be in consecutive AC97 frames. A multi-word message read, a multi-word message write, and single word commands/status may be intermixed in successive AC97 frames, thus allowing higher priority single word commands to be sent in the middle of a multi-word transfer.

A further advantage of a preferred embodiment of the present invention is that memory and real-time processing requirements are lowered because the protocol does not require that a requested multi-word status be available immediately upon receipt of the request. Otherwise, all possible multi-word status responses would generally need to be kept up-to-date at all times, or built in real-time.

Yet another advantage of a preferred embodiment of the present invention is that because the word count in the requested status is returned by the AC97 slave, the AC97 controller can request a status and read the status with no understanding of the status being requested. As a result, the AC97 controller may act as an interface device between the AC97 slave and another device. For example, a CPU may request a status by sending the status request to the AC97 controller (e.g., via a PCI or USB bus interface). The AC97 controller may then read the status from the AC97 slave and send it back to the requesting device which may then interpret the status response.

The foregoing has outlined rather broadly the features and technical advantages of the present invention in order that the detailed description of the invention that follows may be better understood. Additional features and advantages of the invention will be described hereinafter. It should be appreciated by those skilled in the art that the conception and specific illustrative embodiment disclosed may be readily utilized as a basis for modifying or designing other structures or processes for carrying out the same purposes of the present invention. It should also be realized by those skilled in the art that such equivalent constructions do not depart from the spirit and scope of the invention.

### BRIEF DESCRIPTION OF THE DRAWING

For a more complete understanding of the present invention, and the advantages thereof, reference is now made to the following descriptions taken in conjunction with the accompanying drawing, in which:
FIGURE 1 is a block diagram of an AC97 system;
FIGURE 2 is a block diagram of a single controller, multiple slave configuration;
FIGURE 3 is a block diagram of a preferred embodiment isochronous-signal processor;
FIGURE 4 is a high level timing diagram of the slot arrangement within a single AC97 frame;
FIGURE 5 is a detailed timing diagram of an AC97 frame;
FIGURE 6 is a table of a preferred embodiment multi-word control register; and
FIGURE 7 is a table of a preferred embodiment multi-word status register.

### DETAILED DESCRIPTION

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The present invention will be described with respect to preferred embodiments in a specific context, namely an AC97 system. The invention may also be applied, however, to other isochronous-signal processing systems using register-based communication that may benefit from the use of a multiword transfer protocol that does not interrupt isochronous data flow, and may allow protocol independent response time. In addition, while the description of the preferred embodiments refers to an implementation in a DSP, embodiments with functions embedded into codec hardware are also possible. An embedded codec implementation may require IC design and fabrication, and may implement a set of multi-word messages specific to the particular codec design and capabilities.

Many devices may utilize AC97 interfaces, including digital speakers, Internet audio, modems, and wireless technology, and preferred embodiments of the present invention are applicable to any of these areas, particularly those that require vendor-specific AC97 register usage. Typical AC97 slaves that could utilize this technology include audio processors such as equalization processors, and DSPs that are programmed to interface with an AC97 controller. In addition, future AC97 codecs with greater functionality than existing codecs may also integrate embodiments of the present invention into their design. Other embodiments of the invention may be implemented for other types of isochronous data, such as video or multimedia.

In the AC97 specification, the AC97 slave is generally referred to as an AC97 codec. In this description, however, it is referred to as an AC97 slave because it may be implemented, for example, as a dedicated codec, or as a DSP which is programmed to interpret the multi-word messages, or as a combination DSP and codec.

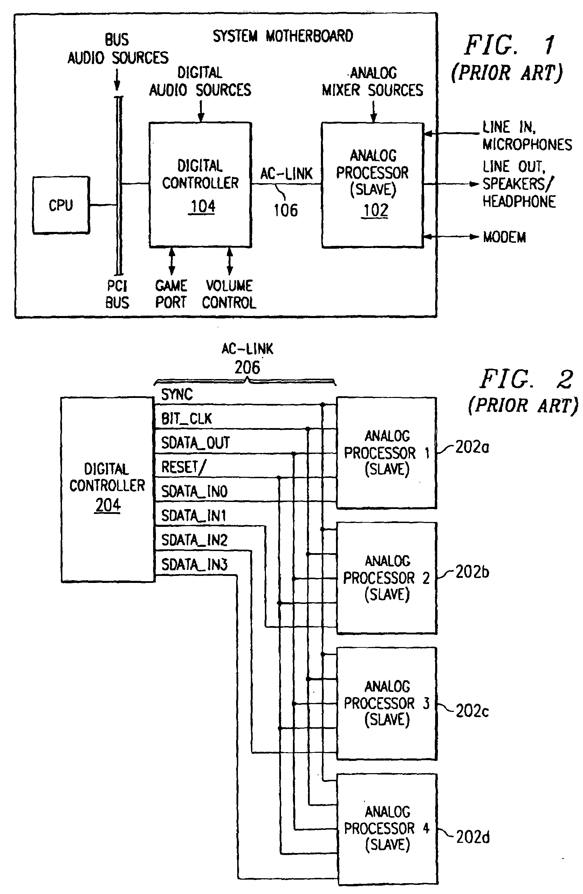

With reference now to Fig. 1, there are shown the primary components of an AC97 audio system. AC97 slave 102 may perform fixed 48 kHz or variable sample rate DAC and ADC conversions, mixing, and analog processing (tone, 3D stereo enhancement, etc.). AC97 slave 102 functions as a slave to AC97 digital controller 104, which is implemented in the digital portion of the AC97 audio system.

AC97 controller 104 is primarily intended for the PCI bus in a personal computer ("PC"), and may function as a stand-alone design that supports, for example, high quality sample rate conversions to/from 48 kHz, wavetable synthesis, and multi-channel encoded sound. AC97 controller 104 may also be embedded within a PCI multifunction accelerator, offering higher levels of integration by combining audio with telephony or graphics. The AC97 architecture may also be implemented in ISA, USB, 1394, or other designs.

AC-link 106 is a digital link connecting AC97 controller 104 to AC97 analog slave 102, and is a bi-directional, five-wire, serial time division multiplex ("TDM") format interface. AC-link 106 is primarily designed as a dedicated point-to-point interconnect on a circuit board, although an off-board interconnect may be implemented.

As can be seen in Fig. 1, digital data is transferred between the digital controller 104 and the analog processor 102. Analog interfaces are processed by AC97 analog slave 102. The AC97 architecture can support stereo two-speaker PC audio, as well as multi-channel extensions and multi-channel audio.

As shown in Fig. 2, AC-link 206 is capable of supporting multi-point connections between one AC97 digital controller 204 and up to four AC97 analog slaves 202a-202d. Multiple slave AC-link implementations utilize a common BIT_CLK, and each slave device uses its own SDATA_IN line. The remaining lines, SYNC, SDATA_OUT, and RESET/, may be separate or shared between slaves.

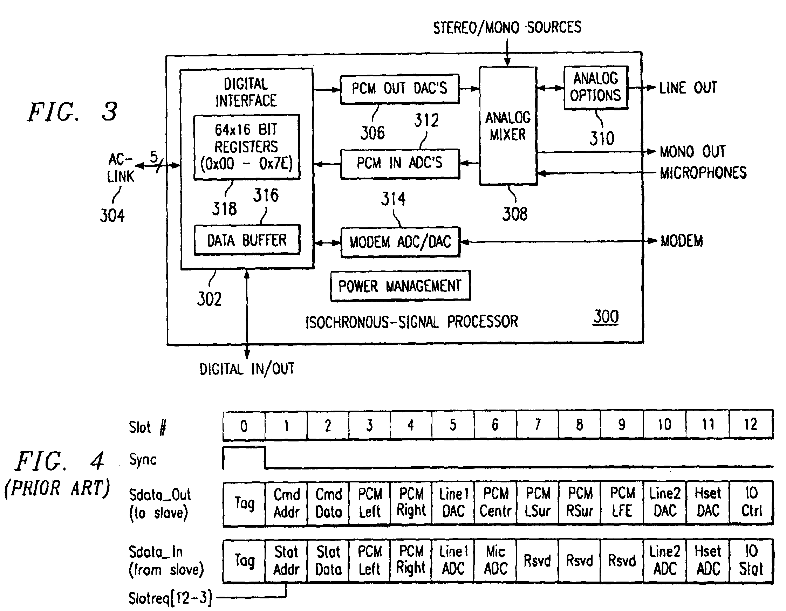

With reference to Fig. 3, there is shown the internal functional blocks of AC97 isochronous-signal processor 300 in accordance with a preferred embodiment of the present invention. Slave digital interface 302 provides AC-link 304 and 64 16-bit registers 318 for communication with an AC97 digital controller. In a preferred embodiment, digital interface 302 also comprises data buffer 316, which is used to hold data transferred using the multi-word protocol described in more detail hereinafter. Alternatively, there may be more than one data buffer, for example, a command data buffer and a status data buffer. As another alternative, data buffer 316 may be located outside of digital interface 302.

Two fixed 48 kHz or variable rate DACs 306 support a stereo pulse code modulation ("PCM") Out channel which contains a mix generated in the AC97 controller of all software sources, including an internal synthesizer and any other digital sources. PCM Out 306 is mixed with additional analog sources and provided with gain control by Analog Mixer Block 308, processed with optional 3D stereo enhancement and tone controls by Analog Options Block 310, and provided as various line out signals. For speakerphone telephony, the mono out may deliver either mic only or a mono mix of sources to the telephony subsystem.

PCM ADCs 312 support two channels of fixed 48 kHz or variable rate input, and may support a 3rd fixed 48 kHz ADC input channel dedicated to the mic. The standard stereo PCM in channel supports record of any mono or stereo source, or mix of sources, from Analog Mixer Block 308. The optional dedicated mic channel extends the range of acoustic echo cancellation capabilities by allowing the audio subsystem to record the MIC along with left and right line out reference signals needed for robust stereo mic input filtering, either in the AC97 digital controller or on the host CPU. The independent mic channel may also be dedicated to voice input applications. Modem ADC/DAC pair 314 supports integration of the line codec portion of a modem AFE function into AC97.

Some of the Analog Mixer Block 308 and Analog Options Block 310 functions may be implemented in a DSP while the data is still in digital format. Thus some of the functionality of Analog Mixer Block 308 and Analog Options Block 310 may be moved into the Digital Interface 302 while maintaining the overall system functionality. It is also possible to move all of the functions in the analog domain into the DSP and use only digital interfaces, without any analog components or processing. For example, isochronous-signal processor 300 may provide digital data signals directly to digital speakers.

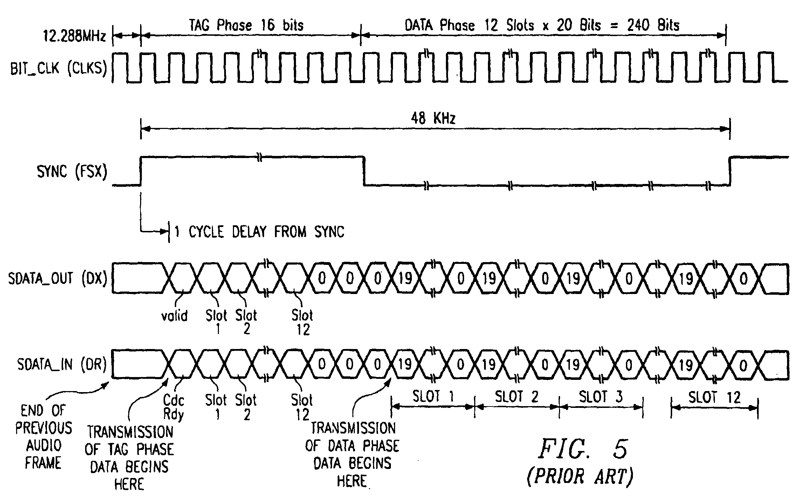

Referring now to Fig. 4, and in greater detail in Fig. 5, there is shown the format and timing of data transfer between an AC97 slave and an AC97 digital control over an AC-link interface. AC97 data is transferred in frames bidirectionally and serially over separate transmit and receive data lines at a 48KHz frame rate. The bit clock and frame sync signals are shared between transmit and receive.

Each frame consists of 256 bits of serial data divided into 13 slots. The first 16 bits of each frame make up slot 0. The remaining 240 bits of each frame make up twelve 20-bit slots of data referred to as slot 1 through slot 12. Each slot has a specific function per the AC97 specification. Slot 1 contains the register address for either command (controller write) or status (controller read) data. Slot 2 contains the register data. Each AC97 register is only 16 bits wide, so the four least significant bits of slot 2 are typically set to zero. Alternatively, the registers may be made wider in an extension of the AC97 specification. Specific bits in the slot 0 word indicate when valid data is contained in slots 1 and 2, respectively.

When an AC97 register is written to, the register address is sent to the AC97 slave in slot 1 and the data is sent in slot 2. The address and data must be in the same AC97 frame per the AC97 specification. When an AC97 register needs to be read, the register address is sent to the AC97 slave in slot 1, and slot 2 is indicated as invalid in slot 0. The AC97 slave must return the contents of the addressed register data in slot 2 of the next AC97 frame, per the AC97 specification.

In accordance with a preferred embodiment of the present invention, two of the vendor-reserved AC97 register addresses in the AC97 slave are allocated to the multi-word protocol. One register address is used for protocol control and status and the other register address is used for data. As a convenience for explanation purposes, three logical names are used for the two register addresses in this description. The three logical register names on the AC97 slave are preferably defined as follows:
1. Multi-Word Control Register ("MWCR"): this register is written to by the AC97 controller to control the multi-word message transfer. The MWCR indicates, for example, the size and type of multi-word transfer.
2. Multi-Word Status Register ("MWSR"): this register is read by the AC97 controller to monitor the status of the multi-word message transfer.
3. Multi-Word Data Register ("MWDR"): this register is written to or read by the AC97 controller to transfer the contents of the multi-word message.

Each logical register name corresponds to a physical register. Although three physical registers (or more) may be used in accordance with the present invention, only two register addresses are used in this preferred embodiment, with the MWCR and the MWSR occupying the same physical register address. The MWCR is write-only and the MWSR is read-only with respect to the AC97 controller. In keeping with the AC97 protocol, the only slots that are used by the multi-word transfer protocol (in addition to slot 0) are slot 1 and slot 2, with slot 1 containing the register address and slot 2 containing data to be read to or from the register specified by slot 1.

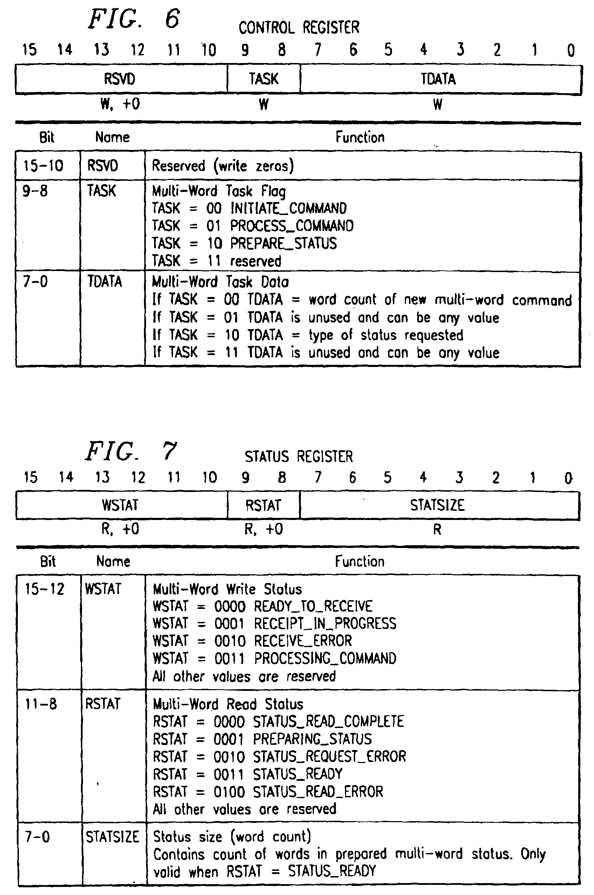

The MWCR and MWSR are preferably located at register address 0x5A, and the MWDR is preferably located at register address 0x5C, as two of the AC97 slave vendor-reserved registers. Alternatively, other registers may be used. The preferred format of bit fields for the MWCR register are shown in Fig. 6, and the bit fields for the MWSR register are shown in Fig. 7. In accordance with the AC97 specification, all 16 bits of the available MWDR are used for data. Alternatively, the multi-word protocol may be implemented with less or more bits of the slot used. The format and size of the bit fields, both in the frame transfer and in the registers, may be changed and still be within the scope of the present invention.

Because the WSTAT and RSTAT bit fields in the MWSR are separate, a multi-word write and a multi-word read may be in progress at the same time. In Figs. 6 & 7, an R denotes Read, a W denotes Write, and a +0 denotes the value at reset.

### Multi-Word Command Write

The multi-word command write mechanism in the AC97 slave uses a multi-word command buffer large enough to contain the largest expected multi-word command, along with a word counter. The message is built in the multi-word command buffer as it is received in real-time. The word counter is used to verify that the correct number of words has been received. Alternatively, a tag byte or similar mechanism may indicate the end of a message. If correct, the message is processed as time permits. In the following flow description, no assumption is made regarding the state of the multi-word command protocol when beginning at step 1. The preferred protocol traffic flow for a multi-word write to an AC97 slave is as follows:
1. The AC97 controller reads the WSTAT field of the MWSR to determine the status of command reception by the AC97 slave.
   If READY_TO_RECEIVE, the AC97 slave has no pending or in-progress command reception so proceed to step 2.
   If RECEIPT_IN_PROGRESS, a command reception previously started has not been completed. Either resume the previous command at step 4 or proceed to step 2 to discard the partial command in the AC97 slave.
   If RECEIVE_ERROR, proceed to step 2 to send the new command or to resend the previous command.
   If PROCESSING_COMMAND, repeat this step until the AC97 slave finishes processing the previous command.
2. The AC97 controller writes to the MWCR. The TASK field is set to INITIATE_COMMAND and the TDATA field contains the word count of the multi-word command being written.
3. The AC97 slave sets the WSTAT field in the MWSR to RECEIPT_IN_PROGRESS, resets a pointer to the start of the multi-word command buffer and loads the word counter with the indicated word count.
   If the word count exceeds the buffer size, the DSP sets the WSTAT field in the MWSR to RECEIVE_ERROR and sets the word counter to -1 so that data written to the MWDR is discarded until a new command is initiated.
4. The AC97 controller writes to the MWDR. It does this repeatedly until all words of the multi-word command have been written.
5. The AC97 slave stores each word written to the MWDR in the multi-word command buffer and updates the word counter. Any data received after the word counter reaches zero is discarded and the word counter is set to -1 to flag a buffer overrun.
6. The AC97 controller writes to the MWCR with the TASK field set to PROCESS_COMMAND.
7. The AC97 slave signals the low priority task or device to process the multi-word command.
   If the word counter is zero, it does this by setting the WSTAT field of the MWSR to PROCESSING_COMMAND.
   If the word counter is non-zero, the data in the multi-word command buffer is discarded and the WSTAT field is set to RECEIVE_ERROR.
8. The AC97 slave multi-word command-processing low priority task or device recognizes PROCESSING_COMMAND in the WSTAT field and processes the multi-word command at its earliest convenience. It sets the WSTAT field to READY_TO_RECEIVE if the command was recognized and correct; otherwise it sets the WSTAT field to RECEIVE_ERROR.
9. The AC97 controller loops back to step 1 to send the next message or to verify that the previous command was processed correctly if no other messages are ready to be sent.

### Multi-Word Status Read

The multi-word status read mechanism in the AC97 slave uses a multi-word status buffer large enough to contain the largest multi-word status, along with a word counter. Alternatively, a tag byte or similar mechanism may indicate the end of a message. The AC97 controller requests a specific status type and the AC97 slave responds by building the requested status in the multi-word status buffer as time permits. The AC97 controller polls the AC97 slave as appropriate for the application to determine when the requested status is ready. The AC97 controller then reads the status from the AC97 slave, one word at a time. In the following flow description, no assumption is made regarding the state of the multi-word status protocol when beginning at step 1. The preferred protocol traffic flow for a multi-word write to an AC97 slave is as follows:
1. The AC97 controller writes to the MWCR. The TASK field is set to PREPARE_STATUS and the TDATA field contains the status type requested.
2. The AC97 slave sets the RSTAT field in the MWSR to PREPARING_STATUS. This signals the low priority task or device to prepare the requested multi-word status and indicates to the AC97 controller that the status is not ready to read.
3. The AC97 slave low-priority task or device recognizes PREPARING_STATUS in the RSTAT field.
   If the status request is valid, it builds the requested status type in the multi-word status buffer, loads the STATSIZE field of the MWSR with the size of the status and sets the RSTAT field to STATUS-READY.
   If the status request is invalid, it sets the RSTAT field to STATUS_REQUEST_ERROR.
4. The AC97 controller reads the RSTAT field of the MWSR to determine the progress of the status preparation request.
   If PREPARING_STATUS, this step is repeated. A timeout can be implemented if desired with appropriate recovery. The AC97 controller can repeatedly read the MWSR as needed until the state of RSTAT changes or the timeout occurs.
   If STATUS_REQUEST_ERROR, the status request was invalid. The AC97 controller should correct the request to be repeated or discard it before returning to step 1.
   If STATUS_READY, the STATSIZE field in the MWSR indicates the number of words in the multi-word status. Proceed to step 5.
5. The AC97 controller repeatedly reads the MWDR. Each read fetches the next word of the prepared status.
6. The AC97 slave responds to each MWDR read performed by the AC97 controller by returning the next word in the multi-word status buffer in the next AC97 frame, in accordance with the AC97 specification.
   If the AC97 controller reads more words than are in the buffer, the AC97 slave sets the RSTAT field in the MWSR to STATUS_READ_ERROR.
   When the AC97 controller reads the last word in the buffer, the AC97 slave sets the RSTAT field to STATUS_READ_COMPLETE.
7. The AC97 controller reads the RSTAT field of the MWSR to confirm that the status was read properly.
   If STATUS_READ_COMPLETE, it loops back to step 1 to request the next status.
   If STATUS_READ_ERROR, it read too many words and needs to correct the error before attempting to repeat the status request.
   If STATUS_READY, it has not yet read all of the status words. This is an error condition since all words should have been read in step 5.

Although the present invention and its advantages have been described in detail, it should be understood that various changes, substitutions and alterations can be made herein without departing from the spirit and scope of the invention. For example, many of the features and functions discussed above can be implemented in software, hardware, or firmware, or a combination thereof. As another example, it will be readily understood by those skilled in the art that the specific protocol (e.g., traffic flow and bit, field & register definitions) may be varied while remaining within the scope of the present invention. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for communicating a multiple-word digital message with an isochronous-signal processor, said method comprising:
receiving a request to transfer a multiple-word block of data;
acknowledging said request;
serially transferring said block of data over multiple frames without interrupting isochronous data flow; and
compiling said block of data in a data buffer.

2. The method of claim 1, wherein said step of transferring said block of data comprises transferring each word of said block of data is transferred in a different frame.

3. The method of claim 1 or claim 2, wherein said isochronous-signal processor functions as an audio codec slave, and said step of communicating is performed with a digital controller via an audio codec-link.

4. The method of any of claims 1 to 3, wherein said step of transferring said block of data comprises transferring block of data is transferred in non-consecutive frames.

5. The method of any of claims 1 to 4, wherein said step of transferring comprises said isochronous-signal processor receiving said block of data.

6. The method of claim 5, wherein said step of compiling is performed as said each word is received.

7. The method of claim 5 or claim 6, further comprising:
receiving a total word count value with said transfer request; and
verifying a number of words received with said word count value.

8. The method of any of claims 5 to 7, further comprising:
processing said block of data after said compiling step is complete.

9. The method of claim 8, further comprising:
acknowledging said step of processing of said block of data after said processing is complete.

10. The method of any preceding claim, wherein said step of transferring comprises said isochronous-signal processor sending said block of data.

11. The method of claim 10, wherein said step of compiling of said block of data is performed before said transfer of said data, and said method further comprises acknowledging that said block of data is ready to transfer after said step of compiling.

12. The method of claim 10 or claim 11, further comprising:
said isochronous-signal processor generating a total word count value; and
verifying a number of words sent with said word count value.

13. An isochronous-signal processor for processing isochronous signals, said processor comprising:
a digital interface for providing a serial digital link to a digital controller, wherein said isochronous signals are transferred over said digital link;
a set of registers for transferring a non-isochronous multiple-word block of data over said digital link, said register set comprising
a control register;
a status register; and
a data register; and
a data buffer for storing said multiple-word block of data, wherein said data buffer is separate from said set of registers.

14. The processor of claim 13, further comprising:
an analog mixer for processing said isochronous signals in analog format;
at least one digital to analog converter (DAC) coupled between said digital interface and said analog mixer; and
at least one analog to digital converter (ADC) coupled between said analog mixer and said digital interface;

15. The processor of claim 13 or claim 14, wherein said control register is arranged for storing information for controlling said multiple-word transfer, said status register is arranged for storing information for monitoring a status of said multiple-word transfer, and each word of said block of data being sequentially transferred through said data register during said multiple-word transfer.

16. The processor of any of claims 13 to 15, wherein said isochronous signals represent audio information.

17. The processor of claim 16, wherein said serial digital link is an audio codec-link.

18. The processor of any of claims 13 to 17, wherein said processor is implemented on one or more devices selected from the group consisting of: an audio codec integrated circuit, a digital signal processor (DSP) integrated circuit, and a combination thereof.

19. The processor of any of claims 13 to 18, wherein said control and status registers are logical registers sharing a single physical register address.

20. The processor of any of claims 13 to 19, wherein said data buffer comprises a command buffer for storing a block of data received over said digital link, and a status buffer for storing a block of data to send over said digital link.

21. The processor of any of claims 13 to 20, further comprising:
a mechanism for determining the end of said multiple-word block of data.

22. The processor of any of claims 13 to 21, wherein said mechanism is a word counter.

23. A protocol for transferring a multiple-word block of data between an isochronous-signal processor and a digital controller over a serial digital interface, said protocol comprising:
said digital controller sending a request to said isochronous-signal processor to transfer said multiple-word block of data, wherein said block of data is non-isochronous;
said isochronous-signal processor acknowledging said request;
serially transferring said block of data over multiple frames without interrupting isochronous data flow; and
said isochronous-signal processor compiling said block of data in a data buffer.

24. The protocol of claim 23, wherein each word of said block of data is transferred in a different frame.

25. The protocol of claim 23 or claim 24, wherein said block of data is transferred in non-consecutive frames.

26. The protocol of claim 23 or claim 24, wherein said block of data is transferred in consecutive frames.

27. The protocol of any of claims 23 to 26, wherein said block of data is non-isochronous
